# EUROPÄISCHE PATENTSCHRIFT

(11) **EP 0 627 189 B1**
(45) Veröffentlichungstag und Bekanntmachung des Hinweises auf die Patenterteilung: **03.09.1997**
(21) Anmeldenummer: 94108373.5
(22) Anmeldetag: 31.05.1994
(51) Int. Cl.: A47L 9/14

(54) **Filterbeutel, insbesondere für Staubsauger**
Dust bag, particularly for a vacuum cleaner
Sac à poussières, en particulier pour aspirateur

(30) Priorität: 01.06.1993 DE 9308159 U
(43) Veröffentlichungstag der Anmeldung: 07.12.1994
(73) Patentinhaber: AICHNER FILTER GmbH, D-92345 Dietfurt/Altmühl (DE)
(72) Erfinder: Aichner, Paul, D-92345 Dietfurt/Altmühl (DE)
(74) Vertreter: Sasse, Volker, Dipl.-Ing.

(56) Entgegenhaltungen:
- EP-A- 0 362 624
- EP-A- 0 439 700
- EP-A- 0 555 655
- DE-A- 2 407 478
- DE-U- 9 207 033
- DE-U- 9 209 964

## Beschreibung

Die Erfindung betrifft einen Filterbeutel, insbesondere für einen Staubsauger, gemäß dem Oberbegriff des Patentanspruchs 1.

Aus der EP-A-0 439 700 ist ein derartiger Filterbeutel bekannt, der einen Verschlußstreifen aus elastischem Material aufweist, der an seinem oberen Ende zwsichen den beiden Platten der Halteplatte fest eingespannt ist, die mit Sollbruchstellen versehen sind. Zum Verschließen der Einlaßöffnung vor der Entnahme des gefüllten Filterbeutels aus dem Staubsauger muß dieser obere Halteplatten-Abschnitt von der übrigen Halteplatte abgetrennt werden, damit dann der Verschlußstreifen zusammen mit dem abgetrennten Abschnitt bewegt werden kann.

Dies ist recht aufwendig und erfordert zudem zusätzliches Material für die beiden Halteplatten-Lagen in diesem abzutrennenden Abschnitt. Darüber hinaus besteht aufgrund des großen Abstandes zwischen der Durchlaßöffnung und der Versteifung des Verschlußstreifens die Gefahr, daß sich der flexible Verschlußstreifen beim Hochziehen im Bereich der Durchlaßöffnung seitlich zusammenzieht und dann die Einlaßöffnung nicht mehr vollständig verschließt. Außerdem ist es nicht auszuschließen, daß die Sollbruchstellen sich nicht trennen, und der Beutel ohne versperrtes Eingangsloch aus der Halterung herausgezogen wird.

Aus der DE-U 9 207 033 ist ein weiterer Filterbeutel bekannt, dessen Halteplatte von zwei Lagen aus steifem Karton gebildet ist. Zwischen diesen Lagen ist eine aus gleich dickem Karton gebildete, steife Verschlußplatte verschiebbar vorgesehen. An diese ist ein weicher, als Schlaufe ausgebildeter Verbindungsstreifen festgeklebt, dessen Gegenende an einer Lage der Halteplatte festgelegt ist. Diese Halteplatte weist den Nachteil auf, daß die Klebeverbindung zwischen der Verschlußplatte und den Verbindungsstreifen beim Verschließen des Filterbeutels einer beträchtlichen Belastung ausgesetzt ist. Diese Klebeverbindung muß daher sehr sorgfältig ausgeführt werden, was diesen Filterbeutel verteuert.

Der Erfindung liegt die Aufgabe zugrunde, einen Filterbeutel der genannten Art so weiterzubilden, daß ein sicheres Verschließen der Einlaßöffnung gewährleistet ist.

Diese Aufgabe wird erfindungsgemäß durch die im kennzeichnenden Teil des Patentanspruchs 1 angegebenen Merkmale gelöst. Durch die steife Ausgestaltung unmittelbar oberhalb der Durchlaßöffnung werden Zugkräfte gleichmäßig über die Breite der Versteiffing verteilt. Hierdurch wird ein seitliches Zusammenziehen des Verschlußstreifens während des Schließens sicher vermieden.

Gemäß Anspruch 2 ist es vorteilhaft, den versteiften Abschnitt wenigstens teilweise innerhalb der Halteplatte anzuordnen. In diesem Fall wird die Versteiffing des Verschlußstreifens wenigstens am Beginn des Ziehvorgangs durch die Steifigkeit der Halteplatte unterstützt. Deshalb können an die Steifigkeit des Verschlußstreifens geringere Anforderungen, insbesondere der Materialstärke und der Längsausdehnung, gestellt werden.

Die Realisierung der Versteiffing des Verschlußstreifens gemäß Anspruch 3 ist besonders vorteilhaft, weil ein Verstärkungsstreifen, der beispielsweise aus Karton bestehen kann, einfach aufgeklebt wird und damit sehr einfach und preisgünstig zur Versteifung des Verschlußstreifens führt. Die Anordnung des Verstärkungsstreifens über die gesamte Breite des Verschlußstreifens bringt besonders günstige Kraftverhältnisse beim Herausziehen des Verschlußstreifens aus der Halteplatte mit sich, da sich die Ziehkräfte gleichmäßig über die gesamte Breite des Verschlußstreifens verteilen, und die Randbereiche sich dadurch nicht in Falten legen.

Insbesondere bei Filterbeuteln mit sehr großer Einlaßöffnung und damit auch sehr großer Durchlaßöffnung im Verschlußstreifen ist es gemäß Anspruch 4 günstig, um die gesamte Durchlaßöffnung einen Verstärkungsstreifen vorzusehen. Da in diesem Fall die im Bereich der Durchlaßöffnung des Verschlußstreifens verbleibenden Stege eine im Verhältnis zur Durchlaßöffnung geringe Breite aufweisen, besteht für diese Stege beim Verschließen der Durchlaßöffnung eine beträchtliche Reißgefahr. Diese wird durch die vorgeschlagene Verstärkung erheblich reduziert. Außerdem bleibt gerade der Verschlußbereich um die Lochöffnung völlig plan, wodurch ein guter Verschluß gewährleistet ist. Infolge der besonders steifen Ausbildung der Lochöffnung können problemlos beliebige Lochformen realisiert werden, ohne daß beim Verschließen des Filterbeutels im Verschlußstreifen schädliche Querkräfte auftreten.

Die Ausbildung gemäß Anspruch 5 ist günstig, da hierdurch das Verschließen des Filterbeutels besonders einfach ist. Der Verstärkungsstreifen kann ohne weiteres aus einem anderen Material gefertigt sein als die Halteplatte. Beim Herausziehen des Verschlußstreifens werden keine zerstörerischen Kräfte auf die Halteplatte hervorgerufen.

Die Anwendung der Merkmale des Anspruchs 6 ist vorteilhaft, da der Filterbeutel mit geringerer Kraft verschlossen werden kann. Dies ist nicht nur für den Anwender bequemer, sondern strapaziert auch den Verschlußstreifen weniger, so daß dessen Neigung zum Reißen reduziert ist. Für den Verschlußstreifen könnte daher auch ein dünneres und damit preisgünstigeres Material eingesetzt werden.

Alternativ oder zusätzlich ist die Anwendung des Merkmals aus Anspruch 7 günstig, da hierdurch die beiden Lagen der Halteplatte beabstandet sind, was die auf den Verschlußstreifen wirkenden Druckkräfte reduziert. Vorzugsweise besitzt die Einlage die gleiche oder eine geringfügigere Stärke als der verstärkte Abschnitt des Verschlußstreifens.

Es hat sich als vorteilhaft erwiesen, wenn die Halteplatte mit den Merkmalen des Anspruchs 8 ausgebildet ist. Die im Randbereich eingesetzten Nieten haben einerseits die Funktion, daß sie die beiden Lagen sicher zusammenhalten. Zum anderen wird mit den Nieten eine geradlinige eng begrenzte Führung für den Verschlußstreifen geboten. Hierbei haben sich besonders vorteilhaft Metall- oder Kunststoffnieten gezeigt, die eine gute Gleiteigenschaft besitzen.

Schließlich ist die Ausbildung des Verschlußstreifens gemäß Anspruch 9 sehr vorteilhaft, weil sich in diesem Fall der aus der Halteplatte herausragende Teil des Verschlußstreifens leicht umlegen und sich problemlos an die innere Form des Staubsaugers anpassen läßt. Die gesamte Halteplatte benötigt daher im Staubsauger erheblich weniger Platz.

In der Zeichnung ist die Erfindung anhand mehrerer Ausführungsbeispiele veranschaulicht.

Dabei zeigen:
- Figur 1: einen Filterbeutel für einen Staubsauger mit einer Halteplatte zum Befestigen am Staubsaugergehäuse,
- Figur 2: die Halteplatte gemäß Fig.1 im größeren Maßstab
- Figur 3: ein weiteres Ausführungsbeispiel einer Halteplatte,
- Figur 4: eine Schnittdarstellung einer Halteplatte mit einem Verschlußstreifen gemäß Figur 3 und
- Figur 5: ein drittes Ausführungsbeispiel einer Halteplatte.

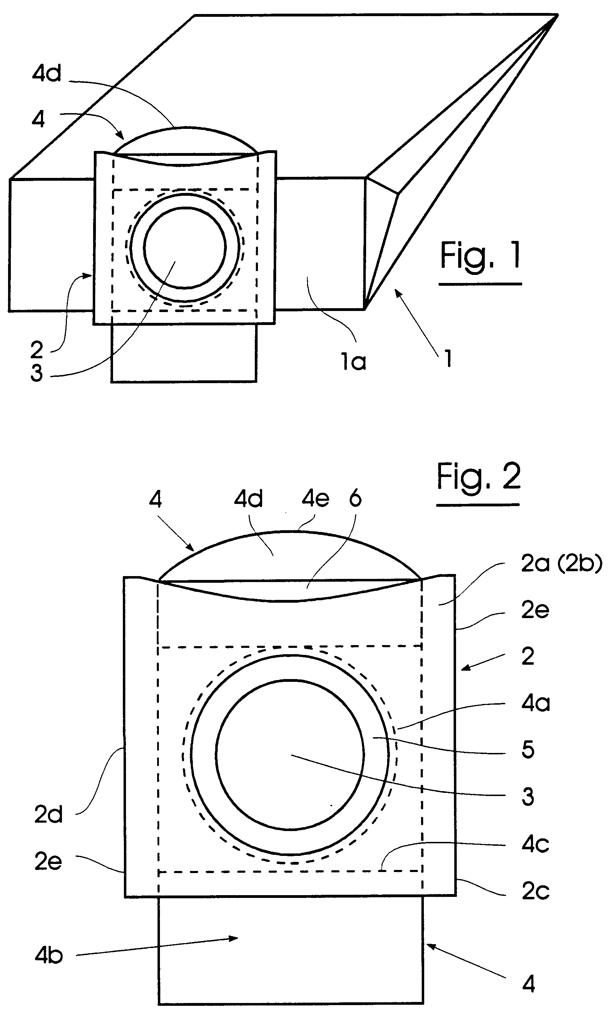

Figur 1 zeigt einen Filterbeutel 1, der zum Einsetzen in ein Gehäuse eines nicht dargestellten Staubsaugers vorgesehen ist. An der Oberseite 1a des Filterbeutels 1 ist eine Halteplatte 2 befestigt, die zum Festlegen des Filterbeutels 1 in einem Staubsauger dient. Diese Halteplatte 2 ist mit einer Einlaßöffnung 3 ausgestattet, durch welche die staubige Luft in den Filterbeutel 1 gelangt. Die Halteplatte 2 ist darüber hinaus mit einem Verschlußstreifen 4 versehen, der zum Verschließen des mit Staub gefüllten Filterbeutels 1 dient, wenn dieser aus dem Staubsauger herausgenommen wird.

Die in Figur 2 dargestellte Halteplatte 2 ist aus Karton zweilagig hergestellt. Sie kann aus einem zusammenhängenden Zuschnitt bestehen, bei dem die beiden Kartonlagen 2a, 2b entlang einer Längskante 2e über eine Faltlinie 2d verbunden sind. Alternativ ist es aber auch möglich, daß die beiden Kartonlagen 2a, 2b aus zwei einzelnen Kartonzuschnitten gebildet werden, die im Bereich ihrer beiden Längskanten 2e miteinander verklebt werden. Zwischen diesen beiden Kartonlagen 2a, 2b der Halteplatte 2 ist der aus einem biegeelastischen Material hergestellte Verschlußstreifen 4 verschiebbar gehalten. Er steht mit seinem als Griffteil 4d ausgebildeten oberen Ende 4e aus der Halteplatte 2 heraus, so daß er dort erfaßt werden kann. Die Einlaßöffnung 3 ist von einer ringförmigen Dichtung 5 aus elastischen Material wie beispielsweise Gummi oder Latex umgeben, die ihrerseits an einer der beiden Lagen 2a, 2b der Halteplatte 2 angeklebt ist. Der Verschlußstreifen 4 weist eine Durchlaßöffnung 4a auf. In der Gebrauchslage deckt sich diese Durchlaßöffnung 4a mit der Einlaßöffnung 3 der Halteplatte 2, um den freien Zugang zum Inneren des Filterbeutels 1 nicht zu behindern. Beim Ziehen am oberen Ende 4e des Verschlußstreifens 4, dem Griffteil 4d, wandert die Durchlaßöffnung 4a nach oben. Damit verschließt der darunterliegende Abschnitt 4b des Verschlußstreifens 4 die Eingangsöffnung 3 und verhindert ein Austreten von Staub aus dem Filterbeutel 1. Oberhalb der Durchlaßöffnung 4a ist der Verschlußstreifen 4 mit einem Verstärkungsstreifen 6 beklebt. Aus Kostengründen wird der Verstärkungsstreifen 6 bevorzugt aus biegesteifem Karton gewählt, der den Verschlußstreifen 4 aussteift. Es wäre aber auch jedes andere Material, wie faserverstärkte Kunststoffe usw. denkbar. Diese Versteifung bewirkt auf einfache Art, daß sich der Verschlußstreifen 4 insbesondere im Bereich der daran anschließenden Durchlaßöffnung 4a beim Herausziehen nicht seitlich zusammenzieht. Der Abschnitt 4b unterhalb der Durchlaßöffnung 4a ragt aus der Halteplatte 2 schlaufenförmig heraus und ist mit seinem Ende 4c an einer der beiden Lagen 2a, 2b der Halteplatte 2 angeklebt. Damit ist gewährleistet, daß der Verschlußstreifen 4 zwar leicht aber nicht vollständig aus der Halteplatte 2 herausgezogen werden kann.

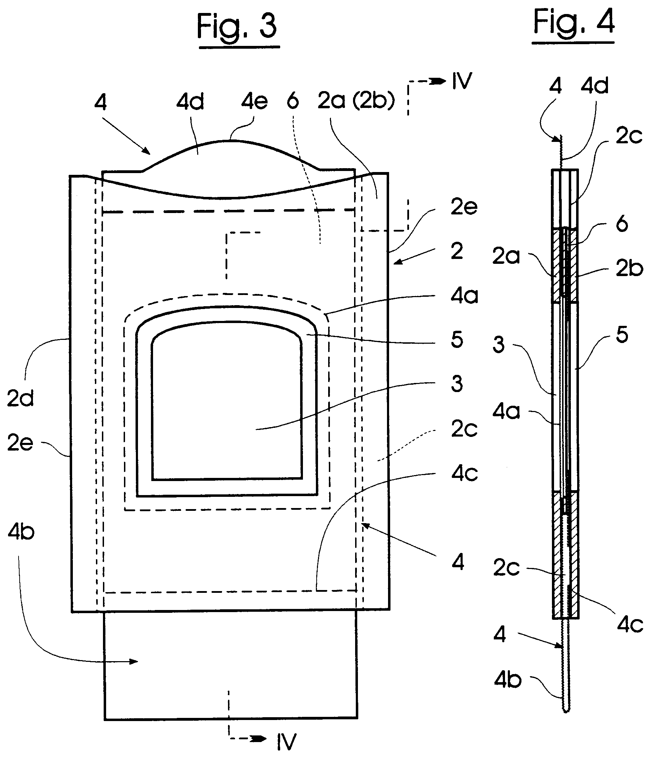

In Figur 3 ist ein alternatives Ausführungsbeispiel einer Halteplatte 2 dargestellt, bei welchem eine verhältnismäßig große Eingangsöffnung 3 vorgesehen ist. Gleiche Bezugszeichen bedeuten gleiche Teile. Zum Stabilisieren des Verschlußstreifens 4 ist dieser um die Durchlaßöffnung 4a mit einem Verstärkungsstreifen 6 aus beispielsweise Karton versehen. Dadurch ist der Verschlußstreifen 4 in diesem ganzen Bereich so steif, daß er beim Hochziehen die gezeigte Form beibehält und sich nicht zusammenzieht. Das aus der Halteplatte 2 herausragende Ende 4e des Verschlußstreifens 4 ist ein Griffteil 4d. Dieser Griffteil 4d weist keine Verstärkung auf, so daß sich dieser Teil im Staubsauger an die Innenform gut anpassen kann.

Figur 4 zeigt eine Schnittdarstellung der Halteplatte 2 gemäß Figur 3 entlang der Schnittlinie IV-IV. Zwischen den beiden Lagen 2a, 2b der Halteplatte 2 ist der Verschlußstreifen 4 angeordnet, der im Bereich um die Durchlaßöffnung 4a und darüber mit einem Verstärkungsstreifen 6 aus biegesteifem Karton verstärkt ist. Ein Teilbereich 4b des Verschlußstreifens 4 ragt wieder schlaufenförmig aus der Halteplatte 2 heraus und ist mit seinem Ende 4c an einer Lage 2b der Halteplatte 2 angeklebt.

Im oberen Bereich ist die Halteplatte 2 in ihrer Seitenansicht dargestellt. Daran ist zu erkennen, daß die beiden Lagen 2a, 2b der Halteplatte 2 nicht direkt zusammengeklebt sind, sondern daß eine Einlage 2c zwischen diesen Lagen 2a, 2b vorgesehen ist. Diese Einlage 2c besitzt die gleiche Stärke wie der verstärkte Verschlußstreifen 4. Eine derartige Einlage 2c ist als dünner Streifen, der sich über die gesamte Länge der Halteplatte 2 erstreckt, ausgebildet und sowohl am linken als auch am rechten Randbereich der Halteplatte 2 vorgesehen.

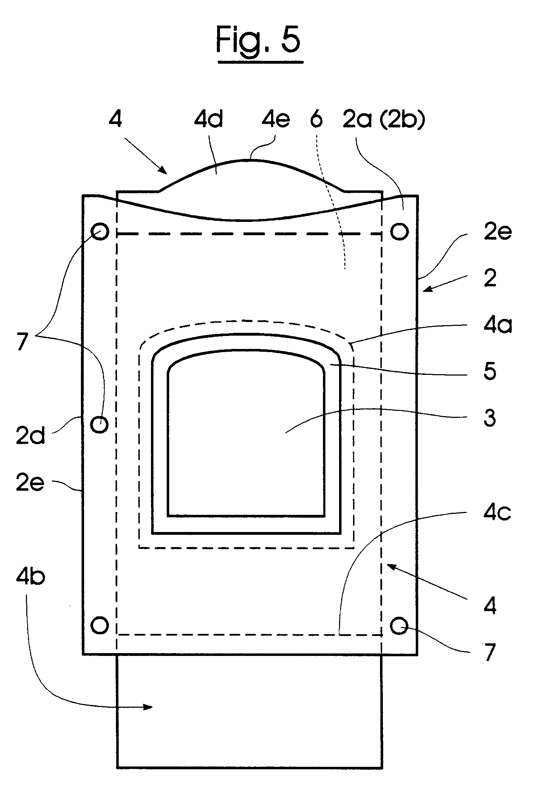

Figur 5 zeigt eine Halteplatte 2 ähnlich der Figur 3, bei der die beiden Lagen 2a, 2b, von im Bereich der beiden Langskanten 2e vorgesehenen Nieten 7 zusammengehalten werden. Diese Nieten 7 geben gleichzeitig dem Verschlußstreifen 4 eine gute Seitenführung. Es ist ausreichend, wenn zwei oder drei Nieten 7 pro Längskante 2e vorgesehen sind.

## Patentansprüche

1. Filterbeutel (1), insbesondere für Staubsauger, mit einer doppellagig (2a, 2b) ausgebildeten Halteplatte (2), die mit einer Einlaßöffnung (3) versehen ist, sowie mit einem verschiebbar gelagerten und auf seiner gesamten Länge aus einem biegeelastischem Material bestehenden Verschlußstreifen (4), der ebenfalls mit einer Durchlaßöffnung (4a) ausgerüstet ist, welche in der Gebrauchslage mit der Einläßöffnung (3) in Deckung liegt, und der mit einem Ende (4c) an der Halteplatte (2) darauf befestigt ist, so daß ein Teilbereich (4b) seiner Erstreckung schlaufenförmig aus der Halteplatte (2) und sein anderes Ende (4e) als Griffteil (4d) aus der Halteplatte (2) herausragt dadurch gekennzeichnet, daß der Verschlußstreifen (4) wenigstens unmittelbar oberhalb der Durchlaßöffnung (4a) versteift ausgebildet ist.

2. Filterbeutel nach Anspruch 1, dadurch gekennzeichnet, daß sich der versteifie Abschnitt des Verschlußstreifens (4) in der Gebrauchslage wenigstens teilweise zwischen den Lagen (2a, 2b) der Halteplatte (2) befindet.

3. Filterbeutel nach Anspruch 1 oder 2, dadurch gekennzeichnet, daß der Verschlußstreifen (4) wenigstens unmittelbar oberhalb der Durchlaßöffnung (4a) durch einen über wenigstens annähernd seine ganze Breite reichenden Verstärkungsstreifen (6) versteift ist.

4. Filterbeutel nach Anspruch 3, dadurch gekennzeichnet, daß sich der Verstärkungsstreifen (6) über den ganzen die Durchlaßöffnung (4a) aufweisenden Bereich des Verschlußstreifens (4) erstreckt.

5. Filterbeutel nach Anspruch 3 oder 4, dadurch gekennzeichnet, daß der Verstärkungsstreifen (6) ausschließlich mit dem Verschlußstreifen (4) verbunden ist.

6. Filterbeutel nach mindestens einem der Ansprüche 1 bis 5, dadurch gekennzeichnet, daß der Verschlußstreifen (4) an seiner Oberfläche eine seine Gleitfähigkeit erhöhende Beschichtung aufweist.

7. Filterbeutel nach mindestens einem der Ansprüche 1 bis 6, dadurch gekennzeichnet, daß der Verschlußstreifen (4) eine verbesserte Gleitfähigkeit aufweist, durch zwischen den beiden Lagen (2a, 2b) der Halteplatte (2) vorgesehene Einlagen (2c), die im Bereich beider Längskanten (2e) vorgesehen sind.

8. Filterbeutel nach mindestens einem der Ansprüche 1 bis 7, dadurch gekennzeichnet, daß die seitliche Führung für den Verschlußstreifen (4) zwischen den beiden Lagen (2a, 2b) der Halteplatte (2) von im Bereich der Längskanten (2e) vorgesehenen Nieten (7) gebildet ist, die die beiden Lagen (2a, 2b) zusammenhalten.

9. Filterbeutel nach mindestens einem der Ansprüche 1 bis 8, dadurch gekennzeichnet, daß der Griffteil (4d) als biegeelastischer Abschnitt aus der Halteplatte (2) herausragt.

## Claims

1. A filter bag (1), in particular for vacuum cleaners, with a holding plate (2) designed with twin layers (2a, 2b), which is provided with an intake opening (3), as well as with a closing strip (4) mounted for displacement and consisting over its whole length of a material elastic in flexure, which is also provided with a through opening (4a) that is in the working position coincident with the intake opening (3), and which is with one end (4c) secured on the holding plate (2), so that a part zone (4b) of its reach projects in the form of a loop out of the holding plate (2), and its other end (4e) projects as a gripping part (4d) out of the holding plate (2), characterized in that the closing strip (4) is stiffened at least directly above the through opening (4a).

2. A filter bag according to claim 1, characterized in that the stiffened section of the closing strip (4) is in the working position disposed at least partly between the layers (2a, 2b) of the holding plate (2).

3. A filter bag according to claim 1 or 2, characterized in that the closing strip (4) is stiffened at least directly above the through opening (4a) by a reinforcing strip (6) extending at least approximately over its whole width.

4. A filter bag according to claim 3, characterized in that the reinforcing strip (6) extends over the whole zone of the closing strip (4) having the through opening (4a).

5. A filter bag according to claim 3 or 4, characterized in that the reinforcing strip (6) is connected solely to the closing strip (4).

6. A filter bag according to at least one of claims 1 to 5, characterized in that the strip (4) has a coating on its surface which increases its ability to slide.

7. A filter bag according to at least one of claims 1 to 6, characterized in that the closing strip (4) has an improved ability to slide, due to inserts (2c) provided between the two layers (2a, 2b) of the holding plate (2) which are provided in the zone of the two longitudinal edges (2e).

8. A filter bag according to at least one of claims 1 to 7, characterized in that the lateral guidance for the closing strip (4) between the two layers (2a, 2b) of the holding plate (2) is formed by rivets (7) provided in the zone of the longitudinal edges (2e), which hold the two layers (2a, 2b) together.

9. A filter bag according to at least one of claims 1 to 8, characterized in that the handle (4d) projects as a flexurally elastic section from the holding plate (2).

## Revendications

1. Sac filtrant (1), en particulier pour aspirateur, comportant une plaque de fixation (2) faite de deux couches (2a, 2b) qui est pourvue d'une ouverture d'entrée (3), et une bande de fermeture (4) constituée sur toute sa longueur d'une matière élastique à la flexion, montée mobile, également pourvue d'une ouverture de passage (4a) qui, en position d'utilisation, coïncide avec l'ouverture d'entrée (3), et fixée à une extrémité (4c) à la plaque de fixation (2), de façon qu'une partie (4b) de son étendue dépasse de la plaque de fixation (2) sous forme de boucle et son autre extrémité (4e) dépasse de la plaque de fixation (2) sous forme de partie de préhension (4d), caractérisé par le fait que la bande de fermeture (4) est rigidifiée au moins immédiatement au-dessus de l'ouverture de passage (4a).

2. Sac filtrant selon la revendication 1, caractérisé par le fait que la partie rigidifiée de la bande de fermeture (4), dans la position d'utilisation, se trouve au moins en partie entre les couches (2a, 2b) de la plaque de fixation (2).

3. Sac filtrant selon l'une des revendications 1 et 2, caractérisé par le fait que la bande de fermeture (4) est rigidifiée au moins immédiatement au-dessus de l'ouverture de passage (4a) par une bande de renfort (6) s'étendant sur au moins approximativement toute sa largeur.

4. Sac filtrant selon la revendication 3, caractérisé par le fait que la bande de renfort (6) s'étend sur toute la zone de la bande de fermeture (4) qui présente l'ouverture de passage (4a).

5. Sac filtrant selon l'une des revendications 3 et 4, caractérisé par le fait que la bande de renfort (6) est jointe uniquement à la bande de fermeture (4).

6. Sac filtrant selon au moins une des revendications 1 à 5, caractérisé par le fait que la bande de fermeture (4) présente à sa surface un revêtement qui augmente sa glissance.

7. Sac filtrant selon au moins une des revendications 1 à 6, caractérisé par le fait que la bande de fermeture (4) a une glissance améliorée par des intercalaires (2c) prévus entre les deux couches (2a, 2b) de la plaque de fixation (2) dans la zone des deux bords longitudinaux (2e).

8. Sac filtrant selon au moins une des revendications 1 à 7, caractérisé par le fait que le guidage latéral pour la bande de fermeture (4) entre les deux couches (2a, 2b) de la plaque de fixation (2) est formé par des rivets (7) prévus dans la zone des bords longitudinaux (2e) qui assemblent les deux couches (2a, 2b).

9. Sac filtrant selon au moins une des revendications 1 à 8, caractérisé par le fait que la partie de préhension (4d) dépasse de la plaque de fixation (2) sous forme de partie élastique à la flexion.
